# EUROPÄISCHE PATENTSCHRIFT

(11) **EP 3 470 160 B1**
(45) Veröffentlichungstag und Bekanntmachung des Hinweises auf die Patenterteilung: **19.02.2020**
(21) Anmeldenummer: 18000673.6
(22) Anmeldetag: 14.08.2018
(51) Int. Cl.: B23K 11/00, B21F 27/10

(54) **GITTERMATTENSCHWEISSMASCHINE UND VERFAHREN ZUM BETREIBEN EINER GITTERMATTENSCHWEISSMASCHINE**
WIRE MESH WELDING MACHINE AND METHOD FOR OPERATING THE SAME
MACHINE DE SOUDAGE DES MATS DE TREILLIS ET PROCÉDÉ DE FONCTIONNEMENT D'UNE MACHINE DE SOUDAGE DES MATS DE TREILLIS

(30) Priorität: 02.10.2017 AT 3922017
(43) Veröffentlichungstag der Anmeldung: 17.04.2019
(73) Patentinhaber: EVG Entwicklungs- u. Verwertungs- Gesellschaft m.b.H., 8074 Raaba (AT)
(72) Erfinder: Reichmann, Thomas, A-8322 Studenzen (AT); Resch, Walter, A-8510 Stainz (AT)
(74) Vertreter: Fox, Tobias

(56) Entgegenhaltungen:
- AT-B- 328 832
- DE-A1- 2 363 369
- US-A- 5 020 575

## Beschreibung

Die Erfindung betrifft eine Gittermattenschweißmaschine mit einer Vorschubvorrichtung für Scharen paralleler Längsdrähte, durch welche die Längsdrähte der Gittermatte in vor einer Schweißpresse angeordnete Führungen und dann in eine Schweißposition jeweils anliegend an einem Querdraht in die Schweißpresse bringbar ist, welche Vorschubvorrichtung eingangsseitig in bezug auf eine Produktions- und Flussrichtung einen mit Klemmelementen für die Längsdrähte versehenen Wagen aufweist, der in Richtung der Längsdrähte unter deren Mitnahme in Flussrichtung der Gittermatte vor und unter Freigabe der Längsdrähte zurück taktweise bewegbar ist, sowie mit einer ausgangsseitig angeordneten Transporteinrichtung, durch die eine am vorderen Ende mit Querdrähten verschweißten Gittermatte angreifbar und aus der Schweißpresse herausziehbar ist. Die Erfindung betrifft ferner ein Verfahren zum Betreiben der erfindungsgemäßen Gittermattenschweißmaschine (siehe, z.B. US 5,020,575 A).

Bei derartigen Vorschubeinrichtungen und Gittermattenschweißmaschinen müssen die Längsdrähte in Klemmelemente, die ortsfest an den vor der Schweißpresse angeordneten Führungen angeordnet sind, eingefädelt werden. Außerdem wird der Produktionsprozess während des Zurückfahrens des ebenso Klemmelemente aufweisenden Wagens unterbrochen. Beides kostet Zeit und verlangsamt die Produktion. Aufgabe der Erfindung ist die Vermeidung dieser Zeitverluste und die Beschleunigung der Produktion.

Die Erfindung besteht bei einer Vorschubvorrichtung der eingangs genannten Art darin, dass die Gittermattenschweißmaschine in Abstand vom und anschließend an den ersten Wagen einen zweiten, ebenso mit Klemmelementen versehenen und bewegbaren Wagen aufweist, wobei durch beide Wagen die jeweilige Längsdrahtschar abwechselnd übernehmbar und abwechselnd auch mit der ausgangsseitigen Transporteinrichtung in der Flussrichtung bewegbar ist.

Die Abfolge der einzelnen Arbeitsschritte beim Betreiben der erfindungsgemäßen Gittermattenschweißmaschine ist:
1. Schritt ein erster Wagen eine neue Schar von mit ihren Vorderenden abgeglichenen Längsdrähten festklemmt und in der Produktions- und Flussrichtung bewegt und dann in einem
2. Schritt bis zu einem zweiten Wagen transportiert, der einen Teil des bis zum hinteren Ende der Längsdrähte der vorhergehend mittels einer Transporteinrichtung in Produktion befindlichen Gittermatte reichenden Weges zurückgefahren ist und dann die Schar vom ersten Wagen übernimmt und in der Produktions- und Flussrichtung bewegt, bis diese in einem
3. Schritt im hinteren Ende der Führungen angekommen ist, worauf der zweite Wagen die Schar freigibt und der erste Wagen die Schar wieder festklemmt und sich nach vorne in Bewegung setzt, währenddessen Produktion und Vorschub der vorher in Produktion befindlichen Gittermatte von der Transporteinrichtung bewerkstelligt werden, worauf in einem
4. Schritt der zweite Wagen wieder zurückfährt und die Schar vom ersten Wagen bis nahe an das hintere Ende der soeben mittels der Transporteinrichtung fertiggestellten vorhergehenden Gittermatte bewegt wird, worauf in einem
5. Schritt der erste Wagen bis zur Verschweißposition des ersten Querdrahtes mit der neuen Schar vorfährt und der bis nahe dem ersten Wagen zurückbewegte zweite Wagen die Schar übernimmt, während die vorhergehende Gittermatte mittels der Transporteinrichtung abgezogen wird, worauf in einem
6. Schritt die Produktion der unter Verwendung der neuen Schar hergestellten Matte mittels des zweiten Wagens fortgesetzt wird und der erste Wagen wieder zurückfährt, währenddessen die Transporteinrichtung mit dem Abtransport der fertigen Gittermatte beschäftigt ist, worauf in einem
7. Schritt der erste Wagen wieder an der Schar anklemmt und die Produktion und Vorwärtsbewegung vom mittlerweile abgeklemmten zweiten Wagen übernimmt, worauf die Schritte 6 und 7 abwechselnd wiederholt werden, bis die Transporteinrichtung wieder zurückkehrt, worauf in einem
8. Schritt der zweite Wagen die Bewegung der Schar solange alleine übernimmt, bis die Transporteinrichtung zurückgekehrt ist, worauf in einem
9. Schritt der zweite Wagen die Schar an die Transporteinrichtung für die weitere Produktion übergibt und in die Position von Schritt 1 zurückfahren kann, während der erste Wagen eine weitere neue Längsdrahtschar übernimmt und beide Wagen in die Position von Schritt 2 gelangen.

In einer bevorzugten Ausführungsform des Verfahrens erfolgt die Abstimmung der Verfahrensschritte derart, dass der Transport aller Drahtscharen kontinuierlich getaktet geschieht.

Abermals bevorzugt ist, dass die Drahtschar vor dem 1. Schritt auf einem Tisch abgelegt und durch ein Längsdrahtrichtlineal ausgerichtet wird.

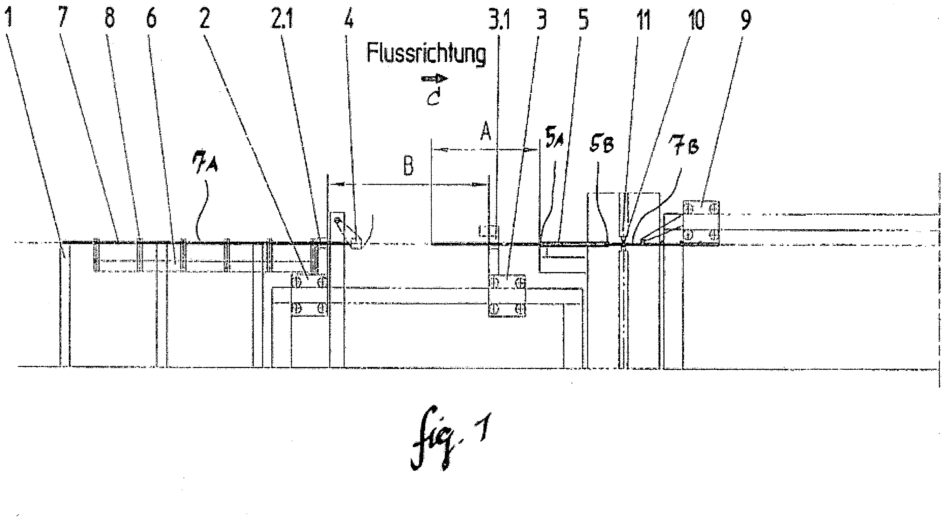

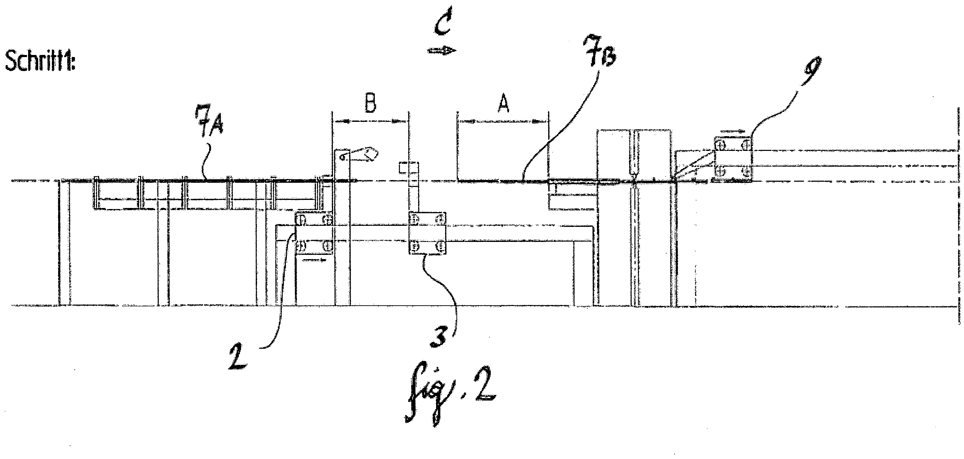

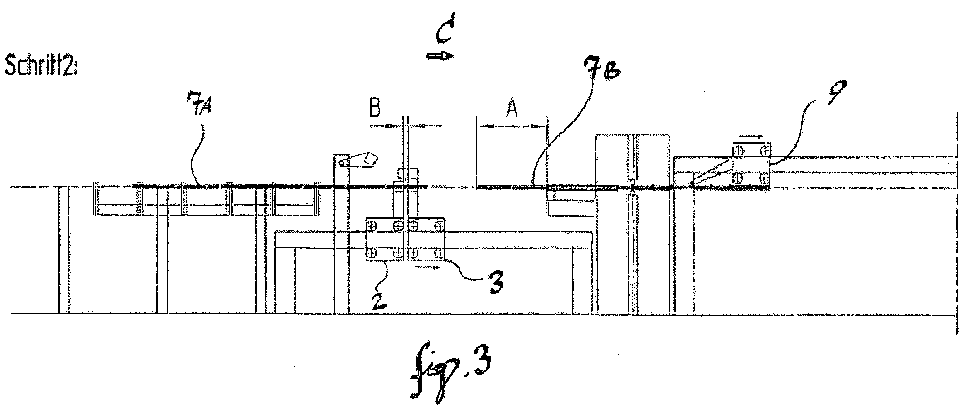

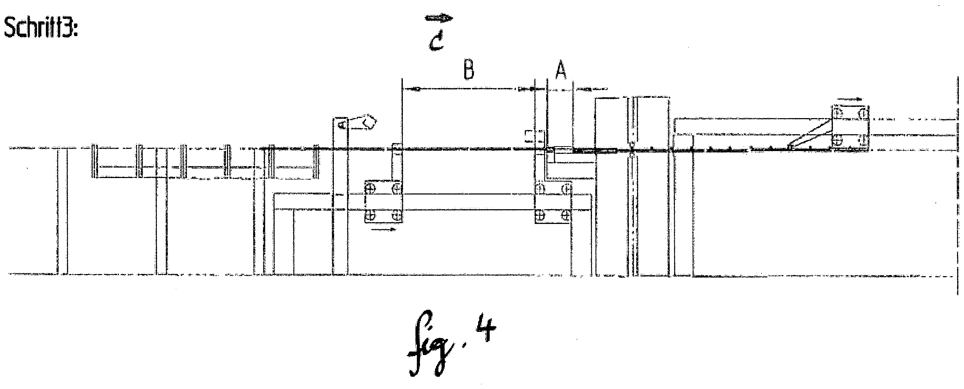

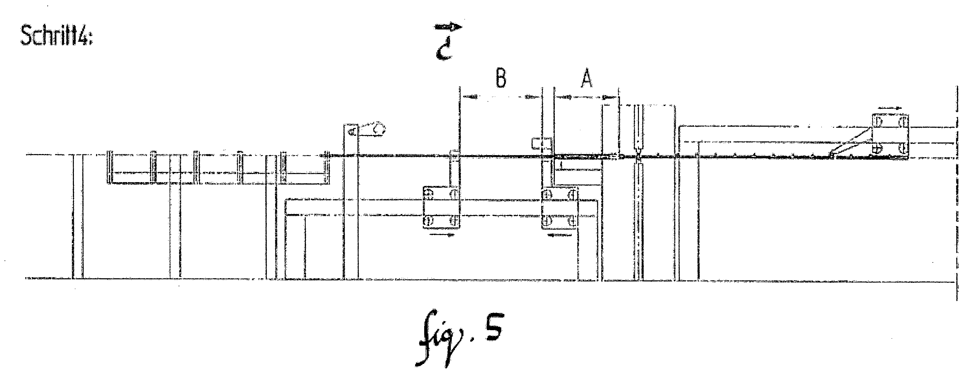

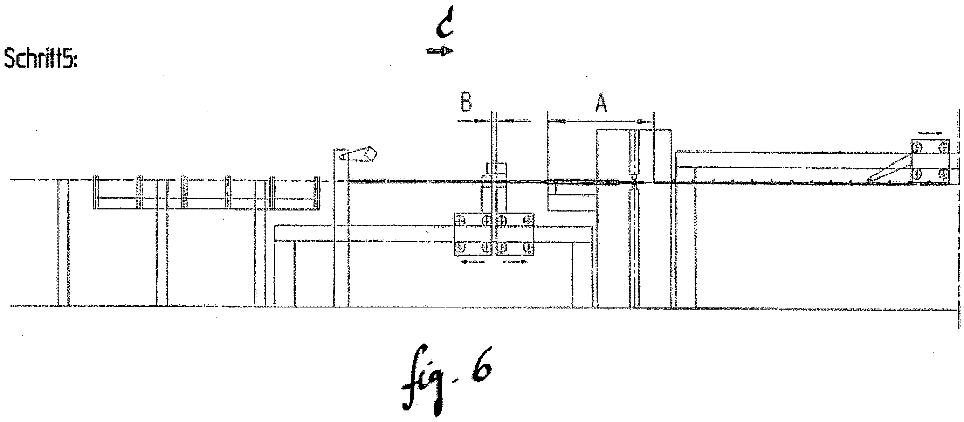

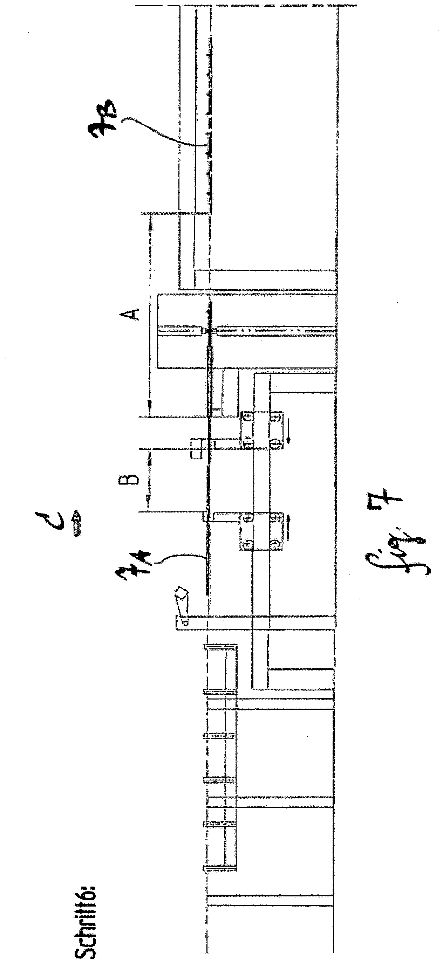

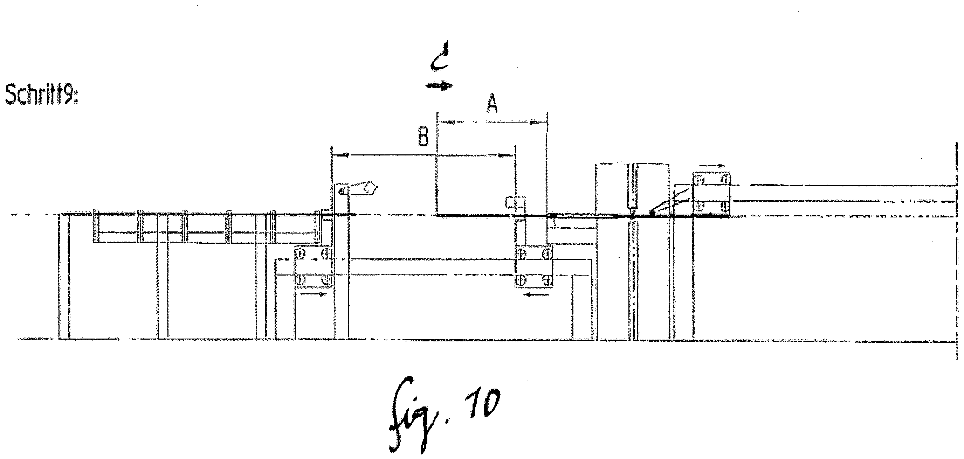

Die Erfindung wird anhand der Zeichnungen näher erläutert, worin Fig. 1 eine Prinzipskizze der Maschine in einer Seitenansicht ist, und die Fig. 2 - 10 die Maschine in der Ansicht der Fig. 1 in verschiedenen aufeinanderfolgenden Produktionsstadien zeigen.

Die in den Fig. 1 - 10 gezeigte Maschine hat folgende wesentliche Bestandteile, die wegen der besseren Übersichtlichkeit und der in allen Figuren gleichen Art der Darstellung nur in Fig. 1 vollständig mit Bezugszeichen versehen sind:
Ein Auflagetisch 1 für die Längsdrähte 7 ist mit einer Übergabeeinrichtung 6 ausgestattet, welche die Längsdrähte 7 mittels Kammleisten 8 durch eine Senkbewegung auf den Auflagetisch 1 und mit ihrem vorderen Ende in einen für die Übergabe wartenden ersten Wagen 2 übergibt. Die am Beginn des Auflagetisches 1 aufgelegte Schar der parallelen Längsdrähte 7 ist mit 7A bezeichnet und die Längsdrähte 7 der Schar 7A sind mit ihren vorderen Enden mittels eines wegschwenkbaren Ausrichtlineals 4 abgeglichen. Dies hat den Vorteil, dass die Ausrichtung der Längsdrähte zumindest erstmalig und mit dafür ausreichender Genauigkeit erfolgen kann.

Das Ausrichten der Drahtschar 7A kann auf zwei Arten erfolgen. Zum einen kann das Ausrichtlineal 4 gegen die Flussrichtung C über den Auflagetisch 1 verfahren und die noch nicht an den ersten Wagen 2 übergebenen Längsdrähte ausrichten. Zum anderen kann das Ausrichtlineal 4 unbewegt bleiben, und die Drahtschar 7A, die bereits an den ersten Wagen 2 übergeben ist, wird in Flussrichtung transportiert. In beiden Fällen bewirkt das Ausrichtlineal 4 die Ausrichtung der Drahtschar 7A.

Im weiteren Produktionsverfahren sind die ausgerichteten Längsdrähte 7 durch Klemmungen und später durch Verschweißung mit Querdrähten 10 fixiert. Durch den Tisch 1 ist eine Längsdrahtschar dann zusammenstellbar, wenn der erste Wagen 2 gerade für den Vorschub einer vorangegangenen Längsdrahtschar beschäftigt ist. Dadurch stehen der Gittermattenschweißmaschine neue, ausgerichtete Längsdrahtscharen kontinuierlich zur Verfügung.

Der erste Wagen 2 ist mit, vorzugsweise pneumatisch, öffenund schließbaren Klemmelementen 2.1 für die Längsdrähte 7 ausgestattet, die in bekannter Weise ausgebildet und nicht näher beschrieben sind. Der Wagen 2 ist mittels eines ebenso nicht dargestellten Antriebs, vorzugsweise mittels Ritzel und Zahnstange, in der Längsrichtung hin- und herverfahrbar. In Abstand in der Produktions- oder Flussrichtung C vom ersten Wagen 2 befindet sich ein zweiter Wagen 3, der ebenso wie der erste Wagen 2 mit Klemmelementen 3.1 ausgestattet und wie dieser hin- und herverfahrbar ist. Weiter in der Produktionsoder Flussrichtung C sind ortsfeste Führungen 5 für die Längsdrähte angeordnet, welche deren richtige Position bei deren nachfolgendem Verschweißen mit den Querdrähten 10 der Gittermatte gewährleisten. Das hintere Ende der Führungen 5 ist mit 5A, deren vorderes Ende mit 5B bezeichnet.

In geringem Abstand vom vorderen Ende 5B der Führungen 5 in der Produktions- oder Flussrichtung C anschließend ist eine Schweißpresse 11 angeordnet, welche die dort befindliche Schar 7B von Längsdrähten nacheinander nach einem jeweiligen Vorschubschritt der Schar 7B mit jeweils einem von der Seite her eingebrachten Querdraht 10 verschweißt. Die in Produktion befindliche Schar ist ebenso wie die mit dieser und den Querdrähten hergestellte fertige Gittermatte mit 7B bezeichnet. In der Produktions- oder Flussrichtung C in Abstand anschließend befindet sich eine Transporteinrichtung 9, welche abwechselnd mit dem zweiten Wagen 3 den schrittweisen Vorschub der in Produktion befindlichen Gittermatte 7B und außerdem den Abtransport der fertigen Gittermatten bewerkstelligt. Die Transporteinrichtung 9 greift dabei an der Gittermatte 7B vorzugsweise an deren vorderem Ende an.

Der Ablauf der Produktion ist im Detail aus den Fig. 2 - 10 ersichtlich, und es wird diesbezüglich auf Anspruch 2 verwiesen. Der Abstand des hinteren Endes der in Produktion befindlichen Gittermatte 7B zum hinteren Ende 5A der Führungen 5 ist in allen Fig. 1 - 10 mit A bezeichnet, der Abstand der beiden Wagen 2, 3 mit B. Aus den Fig. 2 - 10 ist ersichtlich, wie sich die Abstände A, B im Lauf der Produktion ändern. Unterhalb der Wagen 2, 3 ist mit Pfeilen angedeutet, ob diese gerade ruhen oder in Richtung der angedeuteten Pfeile bewegt werden.

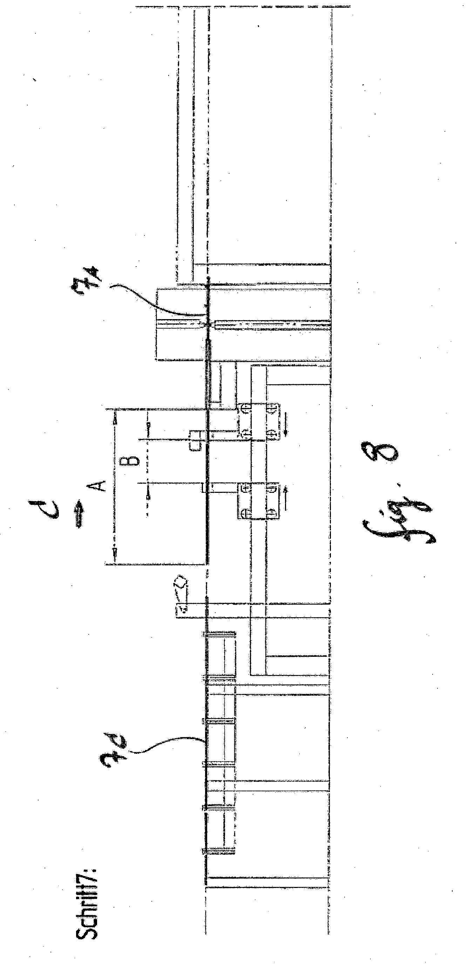

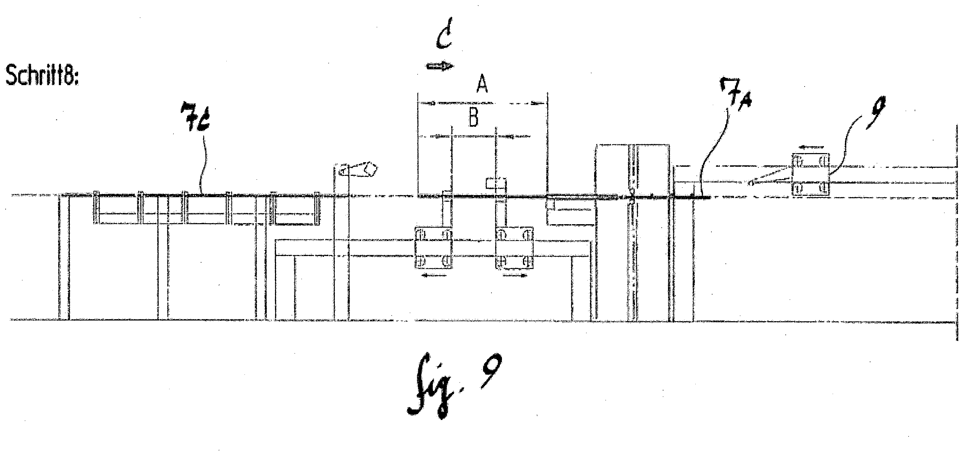

Durch die erfindungsgemäße Vorschubvorrichtung und das Verfahren ist eine ununterbrochene Produktion möglich. Die Verfahrensschritte können zudem derart erfolgen, dass der Abstand zweier aufeinanderfolgender Drahtscharen 7, 7A, 7B (und die folgende Drahtschar 7C gemäß Fig. 8 und 9) deutlich weniger als die Länge der Längsdrähte und also einer Drahtgittermatte entspricht, sogar weniger als der Abstand zweier auf den Längsdrähten verschweißter Querdrähte 10. Im Idealfall entspricht der Abstand zweier bewegter Drahtscharen einem Schweißtakt.

## Patentansprüche

1. Gittermattenschweißmaschine mit einer Vorschubvorrichtung für Scharen paralleler Längsdrähte (7), durch welche die Längsdrähte (7) der Gittermatte in vor einer Schweißpresse (11) angeordnete Führungen (5) und dann in eine Schweißposition jeweils anliegend an einem Querdraht (10) in die Schweißpresse (11) bringbar sind, welche Vorschubvorrichtung eingangsseitig in bezug auf eine Produktions- und Flussrichtung (C) einen mit Klemmelementen (2.1) für die Längsdrähte (7) versehenen Wagen (2) aufweist, der in Richtung der Längsdrähte (7) unter deren Mitnahme in Flussrichtung (C) der Gittermatte vor und unter Freigabe der Längsdrähte (7) zurück taktweise bewegbar ist, sowie mit einer ausgangsseitig angeordneten Transporteinrichtung (9), durch die eine am vorderen Ende mit Querdrähten verschweißten Gittermatte angreifbar und aus der Schweißpresse (11) herausziehbar ist, **dadurch gekennzeichnet, dass** die Gittermattenschweißmaschine in Abstand vom und anschließend an den ersten Wagen (2) einen zweiten, ebenso mit Klemmelementen (3.1) versehenen und bewegbaren Wagen (3) aufweist, wobei durch beide Wagen (2, 3) die jeweilige Längsdrahtschar abwechselnd übernehmbar und abwechselnd auch mit der ausgangsseitigen Transporteinrichtung (9) in der Flussrichtung (C) bewegbar ist.

2. Gittermattenschweißmaschine nach Anspruch 1, **dadurch gekennzeichnet, dass** flussaufwärts zum ersten Wagen (2) ein Tisch (1) angeordnet ist, auf welchem eine Längdrahtschar (7, 7A) ablegbar und durch den ersten Wagen (2) aufgreifbar lagerbar ist.

3. Gittermattenschweißmaschine nach Anspruch 1 oder 2, **dadurch gekennzeichnet, dass** zwischen den Positionen, auf die der erste Wagen (2) verfahrbar ist, ein Längsdrahtausrichtlineal (4) angeordnet ist.

4. Verfahren zum Betreiben der Gittermattenschweißmaschine nach Anspruch 1, **dadurch gekennzeichnet, dass** in aufeinanderfolgenden Schritten in einem
1. Schritt ein erster Wagen (2) eine neue Schar (7A) von mit ihren Vorderenden abgeglichenen Längsdrähten (7) festklemmt und in der Produktions- und Flussrichtung bewegt und dann in einem
2. Schritt bis zu einem zweiten Wagen (3) transportiert, der einen Teil des bis zum hinteren Ende der Längsdrähte der vorhergehend mittels einer Transporteinrichtung (9) in Produktion befindlichen Gittermatte (7B) reichenden Weges zurückgefahren ist und dann die Schar (7A) vom ersten Wagen (2) übernimmt und in der Produktions- und Flussrichtung (C) bewegt, bis diese in einem
3. Schritt im hinteren Ende (5B) der Führungen (5) angekommen ist, worauf der zweite Wagen (3) die Schar (7A) freigibt und der erste Wagen (2) die Schar (7A) wieder festklemmt und sich nach vorne in Bewegung setzt, währenddessen Produktion und Vorschub der vorher in Produktion befindlichen Gittermatte (7B) von der Transporteinrichtung (9) bewerkstelligt werden, worauf in einem
4. Schritt der zweite Wagen (3) wieder zurückfährt und die Schar (7A) vom ersten Wagen (2) bis nahe an das hintere Ende der soeben mittels der Transporteinrichtung (9) fertiggestellten vorhergehenden Gittermatte (7B) bewegt wird, worauf in einem
5. Schritt der erste Wagen (2) bis zur Verschweißposition des ersten Querdrahtes (10) mit der neuen Schar (7A) vorfährt und der bis nahe dem ersten Wagen (2) zurückbewegte zweite Wagen (3) die Schar (7A) übernimmt, während die vorhergehende Gittermatte (7B) mittels der Transporteinrichtung (9) abgezogen wird, worauf in einem
6. Schritt die Produktion der unter Verwendung der neuen Schar (7A) hergestellten Matte mittels des zweiten Wagens (3) fortgesetzt wird und der erste Wagen (2) wieder zurückfährt, währenddessen die Transporteinrichtung (9) mit dem Abtransport der fertigen Gittermatte (7B) beschäftigt ist, worauf in einem
7. Schritt der erste Wagen (2) wieder an der Schar (7A) anklemmt und die Produktion und Vorwärtsbewegung vom mittlerweile abgeklemmten zweiten Wagen (3) übernimmt, worauf die Schritte 6 und 7 abwechselnd wiederholt werden, bis die Transporteinrichtung (9) wieder zurückkehrt, worauf in einem
8. Schritt der zweite Wagen (3) die Bewegung der Schar (7A) solange alleine übernimmt, bis die Transporteinrichtung (9) zurückgekehrt ist, worauf in einem
9. Schritt der zweite Wagen (3) die Schar (7A) an die Transporteinrichtung (9) für die weitere Produktion übergibt und in die Position von Schritt 1 zurückfahren kann, während der erste Wagen (2) eine weitere neue Längsdrahtschar (7C) übernimmt und beide Wagen (2, 3) in die Position von Schritt 2 gelangen.

5. Verfahren nach Anspruch 4, **gekennzeichnet dadurch, dass** die Abstimmung der Verfahrensschritte derart erfolgt, dass der Transport aller Drahtscharen (7A, 7B, 7C) kontinuierlich getaktet geschieht.

6. Verfahren nach Anspruch 4 oder 5, **dadurch gekennzeichnet, dass** die Drahtschar (7A, 7B, 7C) vor dem 1. Schritt auf einem Tisch (1) abgelegt und durch ein Längsdrahtrichtlineal (4) ausgerichtet wird.

## Claims

1. Wire mesh welding machine comprising a feed device for groups of parallel longitudinal wires (7), by means of which device the longitudinal wires (7) of the wire mesh can be brought into guides (5) arranged upstream of a welding press (11) and then into a welding position respectively resting on a transverse wire (10) in the welding press (11), which feed device has, on the inlet side with respect to a production and flow direction (C), a carriage (2) which is provided with clamping elements (2.1) for the longitudinal wires (7) and is cyclically movable forwards in the direction of the longitudinal wires (7) when said wires are conveyed in the flow direction (C) of the wire mesh and backwards when the longitudinal wires (7) are released, said welding machine also comprising a transport apparatus (9) arranged on the outlet side, by means of which a wire mesh which is welded to transverse wires at the front end can be gripped and extracted from the welding press (11), **characterised in that** the wire mesh welding machine has, at a distance from and subsequent to the first carriage (2), a second carriage (3) which is also movable and provided with clamping elements (3.1), it being possible for the relevant longitudinal wire group to be alternately received by means of the two carriages (2, 3) and also alternately moved in the flow direction (C) using the transport apparatus (9) on the outlet side.

2. Wire mesh welding machine according to claim 1, **characterised in that** a table (1) is arranged upstream of the first carriage (2), on which table a longitudinal wire group (7, 7A) can be placed and can be mounted such that it can be picked up by the first carriage (2).

3. Wire mesh welding machine according to either claim 1 or claim 2, **characterised in that** a longitudinal wire alignment rule (4) is arranged between the positions to which the first carriage (2) can be moved.

4. Method for operating the wire mesh welding machine according to claim 1, **characterised in that**, in successive steps,
in a first step, a first carriage (2) clamps a new group (7A) of longitudinal wires (7), the front ends of which are aligned, and moves said wires in the production and flow direction, and then,
in a second step, said carriage transports said wires to a second carriage (3) that has travelled back along part of the path which extends as far as the rear end of the longitudinal wires of the wire mesh (7B), which was previously positioned in production by means of a transport apparatus (9), and then the second carriage then receives the group (7A) from the first carriage (2) and moves in the production and flow direction (C), until,
in a third step, said group has arrived at the rear end (5B) of the guides (5), whereupon the second carriage (3) releases the group (7A), and the first carriage (2) clamps the group (7A) again and moves forward, during which the production and feed of the wire mesh (7B) which was previously positioned in production are accomplished by the transport apparatus (9), whereupon,
in a fourth step, the second carriage (3) travels back again and the group (7A) is moved by the first carriage (2) to the vicinity of the rear end of the preceding wire mesh (7B) which has just been finished by means of the transport apparatus (9), whereupon,
in a fifth step, the first carriage (2) travels forward to the welding position of the first transverse wire (10) together with the new group (7A), and the second carriage (3) which has moved back to the vicinity of the first carriage (2) receives the group (7A), while the preceding wire mesh (7B) is removed by the transport apparatus (9), whereupon,
in a sixth step, the production of the mesh which is made using the new group (7A) is continued by the second carriage (3), and the first carriage (2) travels back again, during which the transport apparatus (9) is occupied with transporting away the finished wire mesh (7B), whereupon,
in a seventh step, the first carriage (2) clamps the group (7A) again, and takes over the production and forward movement of the second carriage (3) which was unclamped in the meantime, whereupon steps 6 and 7 are repeated alternately until the transport apparatus (9) travels back again, whereupon,
in an eighth step, the second carriage (3) takes over the movement of the group (7A) until the transport apparatus (9) has travelled back, whereupon,
in a ninth step, the second carriage (3) transfers the group (7A) to the transport apparatus (9) for further production and can travel back into the position of step 1, while the first carriage (2) receives a further new longitudinal wire group (7C) and the two carriages (2, 3) arrive in the position of step 2.

5. Method according to claim 4, **characterised in that** the method steps are coordinated such that the transport of all wire groups (7A, 7B, 7C) occurs in a continuously clocked manner.

6. Method according to either claim 4 or claim 5, **characterised in that** the wire group (7A, 7B, 7C) is placed on a table (1) and aligned using a longitudinal wire alignment rule (4) before step 1.

## Revendications

1. Machine de soudage de treillis, avec un dispositif d'avancement pour des groupes de fils métalliques longitudinaux parallèles (7), par lequel les fils métalliques longitudinaux (7) du treillis peuvent être amenés dans des guides (5) disposés avant une presse à souder (11) puis, dans une position de soudage, respectivement en application contre un fil métallique transversal (10) dans la presse à souder (11), lequel dispositif d'avancement présente, du côté d'entrée par rapport à une direction (C) de production et de flux, un chariot (2) pourvu d'éléments de serrage (2.1) pour les fils métalliques longitudinaux (7), chariot qui peut être déplacé de manière cadencée vers l'avant dans la direction des fils métalliques longitudinaux (7) en les entraînant dans la direction de flux (C) et en retour en libérant les fils métalliques longitudinaux (7), et avec un équipement de transport (9) disposé du côté de sortie, par lequel un treillis soudé à l'extrémité avant avec des fils métalliques transversaux peut être saisi et retiré de la presse à souder (11), **caractérisée en ce que** la machine de soudage de treillis présente, à distance et à la suite du premier chariot (2), un deuxième chariot (3) lui aussi pourvu d'éléments de serrage (3.1) et mobile, sachant que, par les deux chariots (2, 3), le groupe respectif de fils métalliques longitudinaux peut être alternativement pris en charge et alternativement également déplacé dans la direction de flux (C) avec l'équipement de transport (9) situé du côté de sortie.

2. Machine de soudage de treillis selon la revendication 1, **caractérisée en ce qu'**une table (1) est disposée en amont du premier chariot (2), sur laquelle un groupe de fils métalliques longitudinaux (7, 7A) peut être déposé, et entreposé de manière à pouvoir être saisi par le premier chariot (2).

3. Machine de soudage de treillis selon la revendication 1 ou 2, **caractérisée en ce qu'**une règle (4) d'alignement de fils métalliques longitudinaux est disposée entre les positions auxquelles le premier chariot (2) peut être déplacé.

4. Procédé pour faire fonctionner la machine de soudage de treillis selon la revendication 1, **caractérisé en ce que**, en étapes successives,
au cours d'une première étape, un premier chariot (2) serre à bloc un nouveau groupe (7A) de fils métalliques longitudinaux (7) ajustés à leurs extrémités avant, et le déplace dans la direction de production et de flux,
puis, au cours d'une deuxième étape, le transporte jusqu'à un deuxième chariot (3), qui a effectué en retour une partie du chemin allant jusqu'à l'extrémité arrière des fils métalliques longitudinaux du treillis (7B) se trouvant précédemment en production au moyen d'un équipement de transport (9), puis qui prend en charge à partir du premier chariot (2) le groupe (7A) et le déplace dans la direction (C) de production et de flux, jusqu'à ce que ce groupe, au cours d'une troisième étape, soit arrivé dans l'extrémité arrière (5B) des guides (5), à la suite de quoi le deuxième chariot (3) libère le groupe (7A) et le premier chariot (2) serre à nouveau à bloc le groupe (7A) et se met en mouvement vers l'avant, tandis que sont réalisés par l'équipement de transport (9) la production et l'avancement du treillis (7B) se trouvant précédemment en production,
à la suite de quoi, au cours d'une quatrième étape, le deuxième chariot (3) se déplace à nouveau en retour et le groupe (7A) est déplacé par le premier chariot (2) jusqu'à proximité de l'extrémité arrière du treillis précédent (7B) qui vient d'être achevé au moyen de l'équipement de transport (9),
à la suite de quoi, au cours d'une cinquième étape, le premier chariot (2) est déplacé avec le nouveau groupe (7A) vers l'avant jusqu'à la position de soudage du premier fil transversal (10), et le deuxième chariot (3) déplacé en retour jusqu'à proximité du premier chariot (2) prend en charge le groupe (7A), tandis que le treillis précédent (7B) est retiré au moyen de l'équipement de transport (9),
à la suite de quoi, au cours d'une sixième étape, la production du treillis fabriqué en utilisant le nouveau groupe (7A) est poursuivie au moyen du deuxième chariot (3) et le premier chariot (2) se déplace à nouveau en retour, tandis que l'équipement de transport (9) s'occupe de l'évacuation du treillis achevé (7B),
à la suite de quoi, au cours d'une septième étape, le premier chariot (2) serre à nouveau le groupe (7A) et prend en charge à partir du deuxième chariot entretemps desserré (3) la production et le déplacement vers l'avant, à la suite de quoi les étapes 6 et 7 sont alternativement répétées, jusqu'à ce que l'équipement de transport (9) se déplace à nouveau en retour,
à la suite de quoi, au cours d'une huitième étape, le deuxième chariot (3) prend seul en charge le déplacement du groupe (7A) jusqu'à ce que l'équipement de transport (9) se soit déplacé en retour,
à la suite de quoi, au cours d'une neuvième étape, le deuxième chariot (3) transfère le groupe (7A) à l'équipement de transport (9) pour la suite de la production et peut se déplacer en retour à la position de l'étape 1, tandis que le premier chariot (2) prend en charge un autre nouveau groupe (7C) de fils métalliques longitudinaux, et les deux chariots (2, 3) parviennent à la position de l'étape 2.

5. Procédé selon la revendication 4, **caractérisé en ce que** l'harmonisation des étapes du procédé s'effectue de telle sorte que le transport de tous les groupes de fils métalliques (7A, 7B, 7B) a lieu en continu de manière cadencée.

6. Procédé selon la revendication 4 ou 5, **caractérisé en ce que** le groupe de fils métalliques (7A, 7B, 7C) est, avant la première étape, déposé sur une table (1) et aligné par une règle (4) d'alignement de fils métalliques longitudinaux.
